# FASCICULE DE BREVET EUROPEEN

(11) **EP 3 717 285 B1**
(45) Date de publication et mention de la délivrance du brevet: **29.12.2021**
(21) Numéro de dépôt: 18803418.5
(22) Date de dépôt: 13.11.2018
(51) Int. Cl.: B60C 23/04

(54) **DISPOSITIF AUTONOME DE MESURE DE PRESSION EMBARQUÉ - PROCÉDÉ DE MESURE DE PRESSION**
SYSTEM ZUR FESTELLUNG EINES DRUCKES, DESSEN VERFAHREN
EMBEDDED SYSTEM FOR MEASURING PRESSURE AND METHOD

(30) Priorité: 27.11.2017 FR 1761238
(43) Date de publication de la demande: 07.10.2020
(73) Titulaire: Safran Electronics & Defense, 75015 Paris (FR)
(72) Inventeur: BICKARD, Thierry, 77550 MOISSY-CRAMAYEL (FR); FANTON, Nicolas, 77550 MOISSY-CRAMAYEL (FR); COUTURIER, Emmanuel, 77550 MOISSY-CRAMAYEL (FR)
(74) Mandataire: Prouvez, Julien
(86) Numéro de dépôt international: PCT/EP2018/081131
(87) Numéro de publication internationale: WO 2019/101583

(56) Documents cités:
- AU-A1- 2011 247 846
- US-A1- 2010 164 705
- US-A1- 2013 106 597
- US-A1- 2013 312 509

## Description

### DOMAINE DE L'INVENTION

La présente invention concerne la mesure de pression et plus particulièrement la mesure de pression dans une roue d'aéronef.

### ARRIERE PLAN DE L'INVENTION

Classiquement, une roue d'aéronef comprend une jante cylindrique portant un pneu définissant avec la jante un volume intérieur rempli d'un fluide sous pression, généralement de l'air. La mesure de la pression de l'air enfermé dans la roue est effectuée après chaque atterrissage à l'aide d'un dispositif de mesure de pression monté sur la valve de gonflage solidaire de la jante. La jante renferme généralement une pile de disque de freinage appelée puit de chaleur et qui dégage une importante quantité de chaleur lors du freinage de l'aéronef (températures supérieures à 500 degrés Celsius). Cette chaleur oblige à utiliser des matériaux et des techniques d'assemblage spécifiques qui rendent la fabrication d'un tel capteur de pression très couteux. De plus l'exposition du capteur à une température élevée lors de la mesure perturbe la précision de la mesure.

### OBJET DE L'INVENTION

L'invention a pour objet d'améliorer la précision d'un dispositif de mesure de pression.

### RESUME DE L'INVENTION

A cet effet, on prévoit selon l'invention, une roue de véhicule comprenant une jante portant un pneu définissant avec la jante un volume intérieur rempli d'un fluide sous pression, la roue comprenant un dispositif de mesure de pression monté de manière à pouvoir se déplacer librement dans le volume intérieur. Le dispositif de mesure de pression comporte un circuit électronique de commande qui est relié à un capteur de pression, un capteur d'immobilité de la roue et à un circuit électronique de communication sans fil. Le dispositif de mesure de pression est agencé pour commander une mesure de pression lorsque la roue est détectée comme étant immobile.

On obtient alors un dispositif qui n'est pas soumis à la chaleur du puit de chaleur et qui réalise une mesure de pression en étant, de manière certaine, aussi éloigné que possible du puits de chaleur. Le capteur de pression du dispositif de mesure peut ainsi intégrer des composants dont la résistance à la chaleur est réduite par rapport à l'art antérieur et dont la précision est améliorée. Les températures auxquelles est exposé le dispositif de mesure lors de la mesure étant plus faibles, la compensation en température de la mesure peut être inexistante voire limitée, ce qui résulte en une meilleure précision de la mesure de pression réalisée par le dispositif selon l'invention.

La détection de l'immobilité de la roue est particulièrement efficace lorsque le capteur d'immobilité comprend un accéléromètre.

Les couts de fabrication sont améliorés lorsque les moyens de communication sans fil comprennent un émetteur/récepteur Bluetooth et/ou une étiquette RFID et/ou un émetteur/récepteur radio accordé sur les bandes de fréquence industrielles, scientifiques et médicales.

Une compensation en température peut être réalisée et ainsi améliorer la précision de la mesure de pression lorsque le dispositif de mesure de pression comprend un capteur de température du fluide sous pression.

L'autonomie du dispositif de mesure est grandement améliorée lorsque le dispositif de mesure de pression comprend des moyens de récupération d'énergie cinétique.

Avantageusement, le dispositif de mesure de pression comprend une mémoire de stockage de données.

La robustesse du dispositif de mesure est améliorée lorsque le dispositif comprend une enveloppe extérieure s'étendant autour d'un boîtier renfermant au moins une carte électronique.

Une fabrication économique est obtenue lorsque l'enveloppe extérieure est de forme sensiblement sphérique.

La mesure de pression en milieu hostile peut être effectuée lorsque l'enveloppe extérieure définit un volume intérieur hermétique et que le dispositif de mesure de pression comprend une jauge de déformation solidaire d'une surface intérieure de l'enveloppe extérieure et reliée à la carte électronique. Alternativement, l'enveloppe extérieure définit un volume intérieur et comprend au moins un orifice d'admission du fluide sous pression. Le dispositif de mesure de pression comprend alors un capteur de mesure de la pression dans le volume intérieur.

L'invention porte également sur un dispositif de mesure de pression destiné à être placé dans une roue de véhicule selon l'invention.

L'invention porte également sur un procédé de mesure de pression d'une roue de véhicule à l'aide d'un dispositif de mesure selon l'invention, le procédé comprenant les étapes suivantes :
a) détecter que le dispositif de mesure de pression est immobile depuis une durée prédéterminée ;
b) mesurer la pression du volume intérieur;
c) envoyer à l'aide du circuit électronique de communication sans fil une valeur de la pression mesurée.

### BREVE DESCRIPTION DES DESSINS

Il sera fait référence aux figures annexées parmi lesquelles :
- la figure 1 est une vue schématique en perspective d'une coupe d'un dispositif de mesure de pression selon un premier mode de réalisation de l'invention ;
- la figure 2 est une vue schématique en coupe d'une roue de véhicule selon un premier mode de réalisation de l'invention ;
- les figures 3 à 5 sont des vues schématiques en coupe de la roue de la figure 2 dans diverses configurations dynamiques ;
- la figure 6 est une vue schématique partielle en coupe d'une roue selon un deuxième mode de réalisation de l'invention.

### DESCRIPTION DETAILLEE DE L'INVENTION

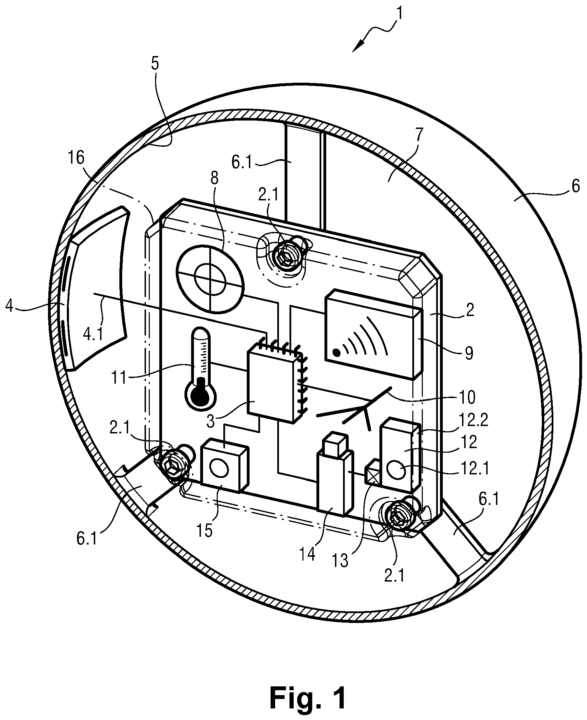

En référence à la figure 1, le dispositif de mesure de pression selon l'invention, généralement désigné 1, comprend une carte électronique 2 sur laquelle est soudé un microcontrôleur 3. Le microcontrôleur 3 est relié par un fil 4.1 à un nanosystème électromécanique résistif de mesure de pression, ici une jauge de contrainte 4 collée sur la surface intérieure 5 d'une enveloppe extérieure 6 sensiblement sphérique qui s'étend autour de la carte électronique 2. L'enveloppe extérieure 6 est ici en caoutchouc synthétique et définit un volume intérieur 7 hermétique. L'enveloppe extérieure 6 est reliée à la carte électronique 2 par trois liens 6.1 élastiques s'étendant depuis la surface intérieure 5 jusqu'à des points de vissage 2.1 sur la carte électronique 2.

La carte électronique 2 reçoit également un accéléromètre 8, un étiquette RFID 9 et un émetteur/récepteur radio 10 pouvant s'accorder sur les bandes de fréquences industrielles, scientifiques et médicales et sur les bandes de réseau de type GSM. Les bandes de fréquences industrielles, scientifiques et médicales sont définies en Europe par la norme EN 55011 et la directive RED et permettent une communication longue distance à faible débit. Aux Etats-Unis, ces bandes sont définies par les parties 15 et 18 du titre 47 du "code of federal regulations". Ces bandes de fréquences sont généralement utilisées dans les applications dites « Internet des objets » ou *IoT* (pour « Internet Of Things » en anglais). Le dispositif de mesure de pression 1 comprend également une sonde de température 11 résistive, un récupérateur 12 d'énergie cinétique comprenant un convertisseur 13 qui convertit l'énergie cinétique captée en énergie électrique et l'envoie à une batterie 14. Le récupérateur d'énergie 12 comprend, ici, une bille 12.1 en matériau ferromagnétique pouvant se déplacer librement dans l'entrefer d'une bobine 12.2.

L'accéléromètre 8, l'étiquette RFID 9, l'émetteur/récepteur radio 10, la sonde de température 11, le récupérateur 12 et la batterie 14 sont solidaires de la carte électronique 2 et reliés au microcontrôleur 3. La carte électronique 2 porte également un module de mémoire 15 SRAM relié au microcontrôleur 3.

La carte électronique 2 ainsi que ses composants sont noyés dans une résine phénolique qui, après durcissement, réalise un boitier 16 de protection de la carte électronique 2, les points de vissage 2.1 étant laissés accessibles.

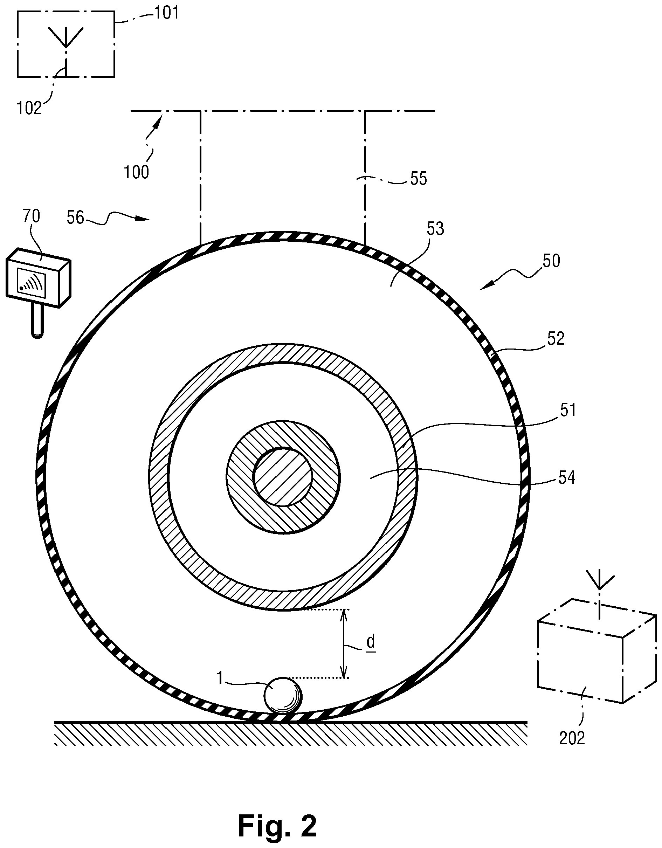

Comme visible en figure 2, le dispositif de mesure de pression 1 est placé dans une roue 50 d'un aéronef 100. La roue 50 comprend une jante 51 sur laquelle est monté un pneu 52. Le pneu 52 définit avec la jante 51 un volume intérieur 53 de la roue 50 rempli d'air sous pression. Le dispositif de mesure de pression 1 est placé dans le pneu 52 lors de sa monte sur la jante 51. Le dispositif de mesure de pression 1 est monté libre dans le volume intérieur 53, c'est-à-dire qu'il n'existe aucune liaison entre la jante 51 et/ou le pneu 52 et le dispositif de mesure de pression 1. Celui-ci peut se déplacer dans le volume intérieur 53 indépendamment du mouvement de la roue 50. Comme c'est généralement le cas, la jante 51 est sensiblement cylindrique et abrite un puits de chaleur 54 comprenant un empilement de disques de freinage alternativement lié à la jante 51 et à un élément fixe d'une jambe 55 d'un atterrisseur 56 qui porte la roue 50.

L'équipement avionique 101 de l'aéronef 100 comprend un émetteur/récepteur radio 102 accordé sur les fréquences d'émission/réception de l'émetteur/récepteur 10 du dispositif de mesure de pression 1.

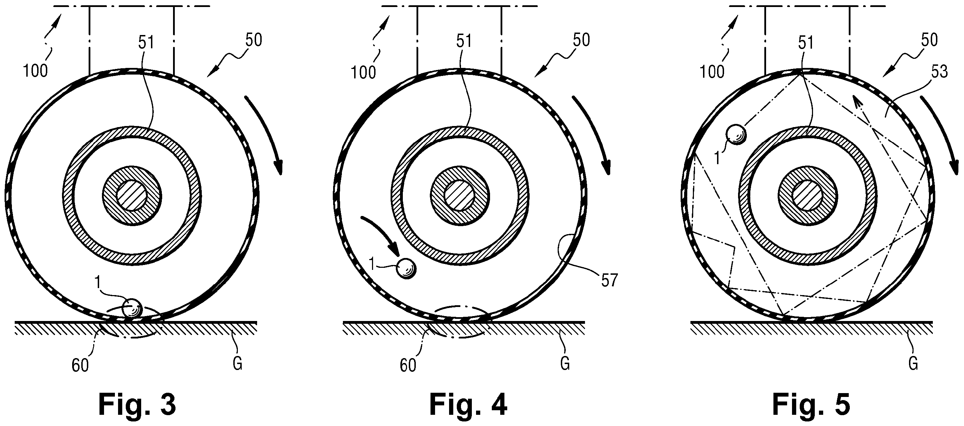

En fonctionnement, et en référence aux figures 3 à 5, le dispositif de mesure de pression 1 est activé lors de sa mise en place dans la roue 50 de l'aéronef 100 lorsque le pneu 52 est placé sur la jante 51 à l'occasion d'une opération de maintenance. Lors du roulage de l'aéronef 100 et de la phase au sol de son décollage, la roue 50 est en rotation et, selon la vitesse de rotation de la roue 50, le dispositif de mesure 1 demeure dans la partie inférieure de la roue 50 et roule sur lui-même à proximité de la zone 60 de contact de la roue 50 avec le sol G (figure 3). Lorsque la vitesse de rotation de la roue 50 est plus élevée, le dispositif de mesure de pression 1 est successivement entrainé par la surface intérieure 57 du pneu 52 pour ensuite retomber dans la zone 60 (figure 4). A vitesse très élevée, le dispositif de mesure de pression 1 rebondit contre la surface intérieure 57 du pneu 52 et se déplace dans le volume intérieur 53. Le dispositif de mesure de pression 1 peut également se trouver plaqué contre la surface intérieure 57 du pneu 52 pendant sa rotation (figure 5). Au cours de ces phases de rotation de la roue 50, l'accéléromètre 8 détecte le mouvement de la roue 50 et le récupérateur 12 convertit l'énergie cinétique à laquelle est soumis le dispositif de mesure de pression 1 en énergie électrique qui est stockée par la batterie 14. Au cours de ces mouvements, le dispositif de mesure 1 est exceptionnellement en contact prolongé avec la jante 51.

Lors de la phase de vol, l'accéléromètre 8 détecte que la roue 50 est immobile. Le microcontrôleur 3 entame alors le décompte d'une durée T prédéterminée et stockée dans le module de mémoire 15, ici une durée de trente minutes. A l'issue de ce décompte, le microcontrôleur 3 lit la mesure de la jauge de contrainte 4 et de la sonde de température 11. Le microcontrôleur 3 transforme la déformation de l'enveloppe extérieure 6 soumise au différentiel de pression régnant entre le volume intérieur 7 du dispositif de pression 1 et le volume intérieur 53 de la roue 50 en une mesure de pression de l'air régnant dans le volume intérieur 53 à l'aide de la jauge de contrainte 4. Le microcontrôleur 3 réalise alors une compensation en température de la mesure de pression, en utilisant la mesure de la sonde de température 11 et en consultant une table de compensation de la dérive de la jauge de contrainte 4 en fonction de la température stockée dans le module de mémoire SRAM 15. Le microcontrôleur 3 envoie ensuite à l'aide de l'émetteur/récepteur radio 10 la valeur de la pression de la roue 50 à l'émetteur/récepteur radio 102 de l'aéronef 100. Le microcontrôleur 3 encode ensuite la valeur de la pression de la roue 50 au format adapté et l'enregistre dans l'étiquette RFID 9. Le microcontrôleur 3 commande ensuite la mise en veille du dispositif de mesure 1. Lors de cette mise en veille, l'énergie consommée par le dispositif est limitée à la seule surveillance de l'accéléromètre 8.

Avantageusement, l'accéléromètre 8 peut détecter le déplacement de l'aéronef 100 lors de sa phase de vol et ne pas effectuer la mesure de pression et la transmission de celle-ci. Lorsque la roue 50 est immobile, le dispositif de mesure de pression 1 est soumis à la gravité et repose au point le plus bas de la roue 50, c'est-à-dire à une distance d de la jante 51.

Lors de l'atterrissage de l'aéronef 100, le dispositif de pression 1 est soumis à la rotation de la roue 50 et se déplace librement dans le volume intérieur 53 du pneu 52. Au cours de la rotation de la roue 50, l'accéléromètre 8 détecte le mouvement de la roue 50 et le récupérateur 12 convertit l'énergie cinétique à laquelle est soumis le dispositif de mesure de pression 1 en énergie électrique qui est stockée par la batterie 14.

Au cours de ces mouvements, le dispositif de mesure 1 est exceptionnellement en contact prolongé avec la jante 51.

Une fois l'aéronef à l'arrêt l'accéléromètre 8 détecte que la roue 50 est immobile. Le microcontrôleur 3 entame alors le décompte d'une durée T prédéterminée et stockée dans le module de mémoire 15, ici une durée de trente minutes. A l'issue de ce décompte, le microcontrôleur 3 lit la mesure de la jauge de contrainte 4 et de la sonde de température 11. Le microcontrôleur 3 transforme la déformation de l'enveloppe extérieure 6 soumise au différentiel de pression régnant entre le volume intérieur 7 du dispositif de pression 1 et le volume intérieur 53 de la roue 50 en une mesure de pression de l'air régnant dans le volume intérieur 53 à l'aide de la jauge de contrainte 4. Le microcontrôleur 3 réalise alors une compensation en température de la mesure de pression, en utilisant la mesure de la sonde de température 11 et en consultant une table de compensation de la dérive de la jauge de contrainte 4 en fonction de la température stockée dans le module de mémoire SRAM 15. Le microcontrôleur 3 envoie ensuite à l'aide de l'émetteur/récepteur radio 10 la mesure de la pression de la roue 50 à l'émetteur/récepteur radio 102 de l'aéronef 100. Cette transmission de la mesure de la pression de la roue 50 peut également être adressée à un récepteur radio 202 d'une plateforme de maintenance 200 du lieu de parking de l'aéronef 100 -généralement un aéroport. Ceci permet d'éviter un déplacement des opérateurs de maintenance jusqu'à la roue 50 et assure un suivi automatisé de la roue 50. Une seconde transmission peut également avoir lieu via l'émetteur/récepteur 10 sur la bande de fréquence GSM, permettant à une plateforme distante d'effectuer un suivi de la roue 50. Le microcontrôleur 3 encode ensuite la valeur de la pression de la roue 50 au format adapté et l'enregistre dans l'étiquette RFID 9. Le microcontrôleur place alors le dispositif de mesure de pression 1 en veille.

Lors de visite d'inspection de la roue 50, la pression peut être contrôlée à la demande à l'aide d'un interrogateur RFID 70. L'opérateur approche un interrogateur RFID 70 de la roue 50. Sous l'effet de l'interrogateur 70, l'étiquette RFID 9 envoie la valeur de la pression de la roue 50 qui est lue par l'interrogateur RFID 70.

On obtient alors un dispositif de mesure de pression 1 qui réalise la mesure de pression en étant systématiquement éloigné le plus possible du puits de chaleur 54. Ceci permet de mettre en œuvre le capteur de pression 4 dans une plage de température dans laquelle l'influence de la température sur le capteur de pression 4 est limitée, voire aisément compensable. Les composants du dispositif de mesure de pression 1 subissent des températures moins élevées et peuvent donc être choisis dans des gammes moins couteuses que les composants de l'art antérieur. Les sollicitations mécaniques engendrées par la force centrifuge sur le dispositif de mesure de pression 1 sont également réduites et permettent, également, de retenir des composants plus économiques que ceux de l'art antérieur. Le dispositif de mesure 1 est ainsi plus économique et plus précis que les solutions existantes.

Les éléments identiques ou analogues à ceux précédemment décrits porteront une référence numérique identique à ceux-ci dans la description qui suit d'un deuxième mode de réalisation de l'invention.

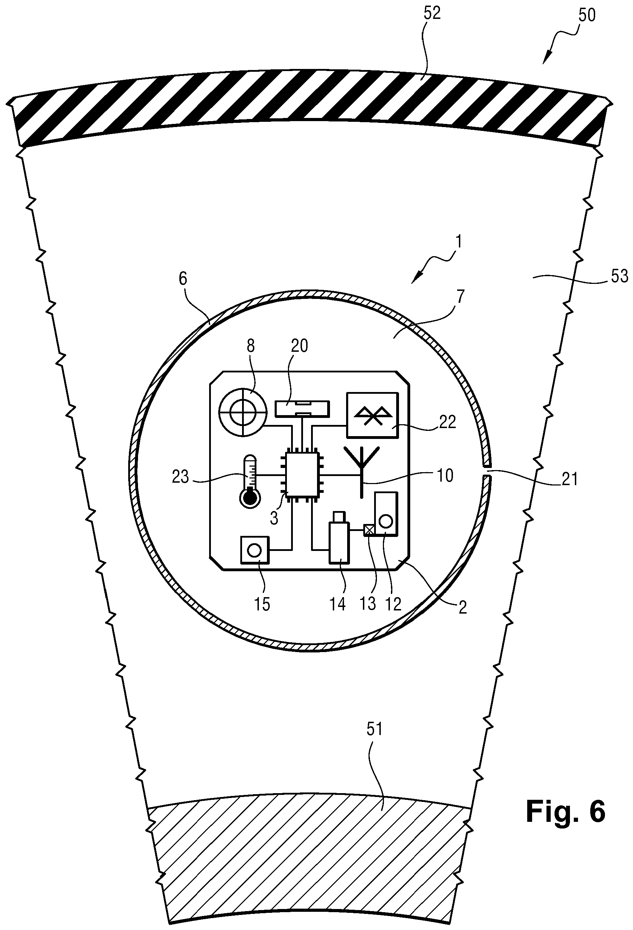

En référence à la figure 6, le dispositif de mesure 1 selon le deuxième mode de réalisation de l'invention, comprend une carte électronique 2 sur laquelle sont soudés un microcontrôleur 3 et un microsystème électromécanique de mesure de pression, ici un capteur de pression capacitif 20. L'enveloppe extérieure 6 comprend un orifice 21 d'admission de fluide dans le volume intérieur 7. La carte électronique 2 est ici montée libre, c'est-à-dire de manière à pouvoir s'y déplacer librement, dans le volume intérieur 7. La carte électronique 2 reçoit également un accéléromètre 8, un émetteur/récepteur Bluetooth 22 et un émetteur/récepteur radio 10 pouvant s'accorder sur les bandes de fréquences industrielles, scientifiques et médicales et sur les bandes de réseau de type GSM. Le dispositif de mesure de pression 1 comprend également un thermocouple 23, un récupérateur 12 d'énergie cinétique comprenant un convertisseur 13 qui convertit l'énergie cinétique captée en énergie électrique et l'envoie à une batterie 14.

Le capteur de pression capacitif 20, l'accéléromètre 8, l'émetteur/récepteur Bluetooth 22, l'émetteur/récepteur radio 10, la sonde de température 11, le récupérateur 12 et la batterie 14 sont solidaires de la carte électronique 2 et reliés au microcontrôleur 3. La carte électronique 2 porte également un module de mémoire 15 SRAM relié au microcontrôleur 3.

La carte électronique 2 ainsi que ses composants sont noyés dans une résine phénolique qui, après durcissement, réalise un boitier 16 de protection de la carte électronique 2.

Lorsque le dispositif de mesure de pression 1 est placé dans une roue 50 d'un aéronef 100, l'air sous pression qui occupe le volume intérieur 53 de la roue 50 pénètre le volume intérieur 7 du dispositif de mesure de pression 1 par l'orifice 21. La pression qui règne dans le volume intérieur 7 du dispositif de mesure de pression 1 est alors égale à la pression qui règne dans le volume intérieur 53 de la roue 50. Cette pression est mesurée par le capteur de pression capacitif 20 et est transmise au microcontrôleur 3.

Le fonctionnement du dispositif de mesure de pression 1 selon le deuxième mode de réalisation de l'invention est identique à celui précédemment décrit. L'émetteur/récepteur Bluetooth 22 permet une communication sans fil aisée de la valeur de la pression de la roue 50 vers des équipements de communication mobile courants de type smartphone.
Bien entendu, la carte électronique 2 peut être solidaire de l'enveloppe extérieure 6, comme dans le premier mode de réalisation de l'invention.

Bien entendu, l'invention n'est pas limitée aux modes de réalisation décrits mais englobe toute variante entrant dans le champ de l'invention tel que défini par les revendications.

En particulier,
- bien qu'ici le dispositif de mesure de pression comprenne un microcontrôleur, l'invention s'applique également à d'autres types de circuit électronique de commande comme par exemple un FPGA, des portes logiques ou un microprocesseur ;
- bien qu'ici le microcontrôleur, ainsi que les autres composants, soient soudés sur une carte électronique, l'invention s'applique également à d'autres moyens de liaison des composants au circuit de commande comme par exemple des liaisons par brochage, par frittage ou par brasage sur un support de type PCB, ou des composants reliés de manière filaire;
- bien qu'ici la jauge de contrainte soit reliée par un fil au microcontrôleur, l'invention s'applique également à des liaisons sans fil entre les différents composants du dispositif de mesure de pression ;
- bien qu'ici le dispositif comprenne un nanosystème de mesure de pression ou un microsystème de mesure de pression, l'invention s'applique également à d'autres types de capteur de pression comme par exemple des capteurs résistifs, inductifs, capacitif ou à effet hall pouvant être nanométriques, micrométriques, millimétriques ou quelconques ;
- bien qu'ici la jauge de déformation soit collée sur la face intérieure de l'enveloppe extérieure du dispositif de mesure de pression, l'invention s'applique également à d'autres moyens de solidariser la jauge de pression à l'enveloppe extérieure comme par exemple une application de résine, une soudure ultrasonique ou un bouterollage ;
- bien qu'ici l'enveloppe extérieure soit de forme sensiblement sphérique, l'invention s'applique également à d'autres formes d'enveloppe extérieure comme par exemple une forme ovoïde, toute forme facilitant le roulement du dispositif dans le volume intérieur de la roue ou une forme quelconque. L'invention s'applique également à un dispositif de mesure de pression dépourvu d'enveloppe extérieure ;
- bien qu'ici l'enveloppe extérieure soit réalisée en caoutchouc synthétique, l'invention s'applique également à des enveloppes réalisées en d'autres matériaux comme par exemple du caoutchouc naturel, de l'EPDM, des polymères, des composites carbone/kevlar de l'acier inoxydable ou tout autre matériau ;
- bien qu'ici la carte électronique soit reliée à l'enveloppe extérieure par trois liens élastiques, l'invention s'applique également à une carte électronique reliée par un unique lien, deux liens ou plus de trois liens élastiques ou non, l'invention s'applique également à une carte électronique montée libre dans l'enveloppe extérieure ;
- bien qu'ici le dispositif de mesure comprenne un accéléromètre, l'invention s'applique également à d'autres types de capteur d'immobilité comme par exemple une centrale inertielle, un gyroscope, un ou plusieurs pendule, une ou plusieurs interrupteur actionné par la gravité ;
- bien qu'ici le dispositif de mesure de pression comprenne une étiquette RFID, l'invention s'applique également à d'autres types de technologies passives d'émission à courte distance comme par exemple un protocole NFC ;
- bien qu'ici le dispositif de mesure de pression comprenne un émetteur/récepteur Bluetooth, l'invention s'applique également à d'autres types de technologies actives d'émission à courte distance comme par exemple les technologies Wi-Fi, ou ultra-son ;
- bien qu'ici le dispositif de mesure de pression comprenne une énetteur/récepteur radio pouvant s'accorder sur les bandes de types GSM, l'invention s'applique également à d'autres types de techniques d'émission à sur un réseau public comme par exemple un protocole 2G, 3G, 4G, 5G, de type LoRa, edge ou dérivées du standard IEEE 802.15.4;
- bien qu'ici le dispositif de mesure de pression comprenne une sonde de température résistive, l'invention s'applique également à d'autres types de capteurs de température du fluide sous pression régnant dans la roue comme par exemple un thermocouple ou un pyromètre infrarouge;
- bien qu'ici le dispositif de mesure de pression comprenne un convertisseur d'énergie cinétique inductif, l'invention s'applique également à d'autres types de convertisseurs d'énergie comme par exemple un convertisseur d'énergie cinétique de type piézoélectrique ou un convertisseur d'énergie thermique ;
- bien qu'ici le dispositif de mesure de pression comprenne une mémoire SRAM, l'invention s'applique également à d'autres types de mémoire de stockage de données comme par exemple une mémoire DPRAM, MAM, PRAM, un disque dur ou une
mémoire EEPROM; - bien qu'ici le dispositif de mesure de pressioncomprenne un boitier en résine phénolique, l'invention s'applique également à d'autres types de boîtiers comme par exemple un boitier métallique, en fibre de carbone ou composite ou en résine époxy ou autre ; - bien qu'ici le dispositif de mesure soit placédans une roue d'aéronef, l'invention s'applique également à d'autres types de roues de véhicule comme par exemple des camions ou des automobiles ; - bien qu'ici le pneu soit rempli d'air comprimé,l'invention s'applique également à des pneus remplis d'autres types de fluide sous pression comme par exemple des gaz ou des liquides ; - bien qu'ici la durée prédéterminée à l'issue delaquelle la mesure de la pression est effectuée soit de trente minutes, l'invention s'applique également à d'autres durées plus ou moins longues.

## Revendications

1. Roue (50) de véhicule (100) comprenant une jante (51) portant un pneu (52) définissant avec la jante (51) un volume intérieur (53) rempli d'un fluide sous pression, la roue (50) comprenant un dispositif de mesure de pression (1) monté de manière à pouvoir se déplacer librement dans le volume intérieur (53), le dispositif de mesure de pression (1) comportant un circuit électronique de commande (3) qui est relié à un capteur de pression (4, 20), un capteur d'immobilité (8) de la roue (50) et à un circuit électronique de communication sans fil (9, 10, 22), le dispositif de mesure de pression (1) étant agencé pour commander une mesure de pression lorsque la roue (50) est détectée comme étant immobile.

2. Roue (50) de véhicule (100) selon la revendication 1, dans laquelle le capteur d'immobilité comprend un accéléromètre (8).

3. Roue (50) de véhicule (100) selon l'une des revendications précédentes, dans laquelle le circuit électronique de communication sans fil comprend un émetteur/récepteur Bluetooth (22) et/ou une étiquette RFID (9) et/ou un émetteur/récepteur radio (10) accordé sur les bandes de fréquence industrielles, scientifiques et médicales.

4. Roue (50) de véhicule (100) selon l'une des revendications précédentes, dans laquelle le dispositif de mesure de pression (1) comprend un capteur de température (11) du fluide sous pression.

5. Roue (50) de véhicule (100) selon l'une des revendications précédentes, dans laquelle le dispositif de mesure de pression (1) comprend des moyens de récupération d'énergie cinétique (12).

6. Roue (50) de véhicule (100) selon l'une des revendications précédentes, dans laquelle le dispositif de mesure de pression (1) comprend une mémoire de stockage de données (15).

7. Roue (50) de véhicule (100) selon l'une des revendications précédentes, dans laquelle le dispositif de mesure de pression (1) comprend une enveloppe extérieure (6) s'étendant autour d'un boîtier (16) renfermant au moins une carte électronique (2).

8. Roue (50) de véhicule (100) selon la revendication 7, dans laquelle l'enveloppe extérieure (6) est de forme sensiblement sphérique.

9. Roue (50) de véhicule (100) selon la revendication 7 ou 8, dans laquelle l'enveloppe extérieure (6) définit un volume intérieur (7) hermétique, le dispositif de mesure de pression (1) comprenant une jauge de déformation (4) solidaire d'une surface intérieure (5) de l'enveloppe extérieure (6) et reliée à la carte électronique (2).

10. Roue (50) de véhicule (100) selon la revendication 7 ou 8, dans laquelle l'enveloppe extérieure (6) définit un volume intérieur (7) et comprend au moins un orifice (21) d'admission du fluide sous pression, le dispositif de mesure de pression (1) comprenant un capteur de mesure de la pression (20) dans le volume intérieur.

11. Dispositif de mesure de pression (1) destiné à être placé dans une roue (50) de véhicule (100) selon l'une des revendications 1 à 10.

12. Procédé de mesure de pression d'une roue (50) de véhicule (100) à l'aide d'un dispositif de mesure selon l'une quelconque des revendications 1 à 10, le procédé comprenant les étapes suivantes :
a) détecter que le dispositif de mesure de pression (1) est immobile depuis une durée prédéterminée ;
b) mesurer la pression du volume intérieur (53) ;
c) envoyer à l'aide du circuit électronique de communication sans fil (9, 10, 22) une valeur de la pression mesurée.

## Patentansprüche

1. Rad (50) eines Fahrzeugs (100), umfassend eine Felge (51), die einen Reifen (52) trägt, der mit der Felge (51) ein Innenvolumen (53) definiert, das mit einem Druckfluid gefüllt ist, wobei das Rad (50) eine Druckmessvorrichtung (1) umfasst, die derart montiert ist, dass sie sich in dem Innenvolumen (53) frei bewegen kann, wobei die Druckmessvorrichtung (1) eine elektronische Steuerschaltung (3) umfasst, die mit einem Drucksensor (4, 20), einem Immobilitätssensor (8) zum Erfassen der Immobilität des Rades (50) und mit einer elektronischen Schaltung (9, 10, 22) zur drahtlosen Kommunikation verbunden ist, wobei die Druckmessvorrichtung (1) ausgebildet ist, um eine Druckmessung zu steuern, wenn das Rad (50) als bewegungslos erfasst wird.

2. Rad (50) eines Fahrzeugs (100) nach Anspruch 1, bei dem der Immobilitätssensor einen Beschleunigungsmesser (8) umfasst.

3. Rad (50) eines Fahrzeugs (100) nach einem der vorhergehenden Ansprüche, bei dem die elektronische Schaltung zur drahtlosen Kommunikation einen Bluetooth-Sender/Empfänger (22) und/oder ein RFID-Etikett (9) und/oder einen Funksender/-empfänger (10) umfasst, der auf die industriellen, wissenschaftlichen und medizinischen Frequenzbänder abgestimmt ist.

4. Rad (50) eines Fahrzeugs (100) nach einem der vorhergehenden Ansprüche, bei dem die Druckmessvorrichtung (1) einen Temperatursensor (11) zum Erfassen einer Temperatur des Druckfluids umfasst.

5. Rad (50) eines Fahrzeugs (100) nach einem der vorhergehenden Ansprüche, bei dem die Druckmessvorrichtung (1) Mittel (12) zur Rückgewinnung kinetischer Energie umfasst.

6. Rad (50) eines Fahrzeugs (100) nach einem der vorhergehenden Ansprüche, bei dem die Druckmessvorrichtung (1) einen Datenspeicher (15) umfasst.

7. Rad (50) eines Fahrzeugs (100) nach einem der vorhergehenden Ansprüche, bei dem die Druckmessvorrichtung (1) eine äußere Umhüllung (6) umfasst, die sich um ein Gehäuse (16) erstreckt, das mindestens eine Leiterplatte (2) enthält.

8. Rad (50) eines Fahrzeugs (100) nach Anspruch 7, bei dem die äußere Umhüllung (6) im Wesentlichen kugelförmig ist.

9. Rad (50) eines Fahrzeugs (100) nach Anspruch 7 oder 8, bei dem die äußere Umhüllung (6) ein hermetisch abgeschlossenes Innenvolumen (7) definiert, wobei die Druckmessvorrichtung (1) einen Dehnungsmessstreifen (4) umfasst, der mit einer Innenfläche (5) der äußeren Umhüllung (6) fest verbunden und an die Leiterplatte (2) angeschlossen ist.

10. Rad (50) eines Fahrzeugs (100) nach Anspruch 7 oder 8, bei dem die äußere Umhüllung (6) ein Innenvolumen (7) definiert und mindestens eine Einlassöffnung (21) für das Druckfluid umfasst, wobei die Druckmessvorrichtung (1) einen Druckmesssensor (20) in dem Innenvolumen umfasst.

11. Druckmessvorrichtung (1), die dazu bestimmt ist, in einem Rad (50) eines Fahrzeugs (100) nach einem der Ansprüche 1 bis 10 platziert zu werden.

12. Verfahren zum Messen eines Druckes eines Rades (50) eines Fahrzeugs (100) mit Hilfe einer Messvorrichtung nach einem der Ansprüche 1 bis 10, wobei das Verfahren die folgenden Schritte umfasst:
a) Erfassen, ob die Druckmessvorrichtung (1) für eine vorbestimmte Dauer bewegungslos ist;
b) Messen des Druckes des Innenvolumens (53);
c) Senden eines Wertes des gemessenen Druckes mit Hilfe der elektronischen Schaltung (9, 10, 22) zur drahtlosen Kommunikation.

## Claims

1. A vehicle wheel (50) for a vehicle (100), the wheel comprising a rim (51) carrying a tire (52) co-operating with the rim (51) to define an inside volume (53) that is filled with a fluid under pressure, the wheel (50) including a pressure measurement device (1) mounted so as to be capable of moving freely in the inside volume (53), the pressure measurement device (1) comprising an electronic control circuit (3) that is connected to a pressure sensor (4, 20), to an absence-of-movement sensor (8) for sensing when the wheel (50) is not moving, and to an electronic circuit (9, 10, 22) for wireless communication, the pressure measurement device (1) being arranged to cause pressure to be measured while the wheel (50) is detected as not moving.

2. A vehicle wheel (50) according to claim 1, wherein the absence-of-movement sensor comprises an accelerometer (8) .

3. A vehicle wheel (50) according to any preceding claim, wherein the electronic circuit for wireless communication comprises a Bluetooth transceiver (22) and/or an RFID tag (9) and/or a radio transceiver (10) tuned to the industrial, scientific, and medical frequency bands.

4. A vehicle wheel (50) according to any preceding claim, wherein the pressure measurement device (1) includes a temperature sensor (11) for sensing the temperature of the fluid under pressure.

5. A vehicle wheel (50) according to any preceding claim, wherein the pressure measurement device (1) includes means (12) for recovering kinetic energy.

6. A vehicle wheel (50) according to any preceding claim, wherein the pressure measurement device (1) includes a data storage memory (15).

7. A vehicle wheel (50) according to any preceding claim, wherein the pressure measurement device (1) includes an outer shell (6) extending around a housing (16) containing at least one electronic card (2).

8. A vehicle wheel (50) according to claim 7, wherein the outer shell (6) is substantially spherical in shape.

9. A vehicle wheel (50) according to claim 7 or claim 8, wherein the outer shell (6) defines a hermetically sealed inside volume (7), the pressure measurement device (1) including a strain gauge (4) secured to an inside surface (5) of the outer shell (6) and connected to the electronic card (2).

10. A vehicle wheel (50) according to claim 7 or claim 8, wherein the outer shell (6) defines an inside volume (7) and includes at least one orifice (21) for admitting the fluid under pressure, the pressure measurement device (1) including a pressure measurement sensor (20) in the inside volume.

11. A pressure measurement device (1) for placing in a vehicle wheel (50) according to any one of claims 1 to 10.

12. A method of measuring pressure in a vehicle wheel (50) using a measurement device according to any one of claims 1 to 10, the method comprising the following steps:
a) detecting that the pressure measurement device (1) has not been moving for a predetermined duration;
b) measuring the pressure of the inside volume (53); and
c) using the electronic circuit (9, 10, 22) for wireless communication to send a measured pressure value.
